# EUROPÄISCHE PATENTSCHRIFT

(11) **EP 1 995 008 B1**
(45) Veröffentlichungstag und Bekanntmachung des Hinweises auf die Patenterteilung: **07.04.2010**
(21) Anmeldenummer: 08156874.3
(22) Anmeldetag: 23.05.2008
(51) Int. Cl.: B23B 29/04, B23D 61/06

(54) **Schneidwerkzeug mit lösbar befestigten Schneidplatten**
Cutting tool with attached cutting plates which can be removed
Outil de coupe doté de plaques de coupe fixées de manière amovible

(30) Priorität: 24.05.2007 AT 8262007
(43) Veröffentlichungstag der Anmeldung: 26.11.2008
(73) Patentinhaber: BOEHLERIT GmbH & Co.KG., 8605 Kapfenberg (AT); Maschinenfabrik Liezen und Gießerei Ges.m.b.H., 8940 Liezen (AT)
(72) Erfinder: Bärnthaler, Walter, 8641 St. Marein im Mürztal (AT); Schlemmer, Armin, 8600 Oberaich (AT); Winter, Johann, 4560 Kirchdorf (AT)
(74) Vertreter: Wirnsberger, Gernot

(56) Entgegenhaltungen:
- EP-B1- 0 095 062
- CH-A5- 688 794
- DE-A1- 10 042 402
- DE-C1- 19 623 081

## Beschreibung

Die Erfindung betrifft ein Schneidwerkzeug mit einem Grundkörper, der zumindest einen Plattensitz aufweist, in welchem eine Schneidplatte gehalten ist. Ein Schneidwerkzeug gemäß dem Oberbegriff von Anspruch 1 ist aus der DE 19 623 081 bekannt.

Bei Schneidwerkzeugen dieser Art sollen Schneidplatten einerseits möglichst fest im Plattensitz fixierbar sein, um im Gebrauch ein Lösen von Schneidplatten zu vermeiden. Andererseits ist insbesondere bei Schneidwerkzeugen, die eine Vielzahl von Plattensitzen aufweisen und dementsprechend mit vielen Schneidplatten ausgestattet sind, eine lösbare Befestigung der Schneidplatten erwünscht, damit einzelne Schneidplatten austauschbar sind, sobald diese verschlissen sind.

Schneidplatten können am Grundkörper eines Schneidwerkzeuges in der Regel auf verschiedene Arten angebracht werden, wie es nachfolgend exemplarisch für Sägeblätter dargestellt ist.

Beispielsweise können bei Sägeblättern, die mit am Umfang eines Grundkörpers verteilten Plattensitzen ausgebildet sind, in welchen Schneidplatten gehalten sind, welche bei Rotation des Sägeblattes eine Spanabnahme am bearbeiteten Werkstück bewirken, die einzelnen Schneidplatten durch Löten am Grundkörper angebracht sein. Dies hat jedoch den Nachteil, dass nur eine einzige Schneidgeometrie einsetzbar ist. Sobald nämlich die Schneidplatten mit dem Grundkörper durch Löten verbunden sind, kann eine Schneidgeometrie nicht mehr geändert werden. Darüber hinaus ist mit einem Löten auch der Nachteil verbunden, dass ein Nachschärfen stets vor Ort durchgeführt werden muss. Ein Lösen einzelner Schneidplatten und ein individuelles, fachgerechtes Nachschärfen beim Schneidplattenhersteller sind nicht möglich. Auch muss das gesamte Sägeblatt ausgetauscht werden, wenn nur ein Teil der Schneidplatten unbrauchbar geworden ist.

Eine andere Methode besteht darin, die einzelnen Schneidplatten mit Schrauben am Grundkörper zu befestigen. Abgesehen davon, dass hierfür in jeder Schneidplatte ein Befestigungsloch vorgesehen sein muss, was eine Stabilität der Schneidplatte im Schneideinsatz beeinträchtigt, lässt sich diese Methode nur auf Schneidplatten anwenden, die eine gewisse Mindestgröße aufweisen. Bei kleinen Schneidplatten, wie sie für geringe Schnittbreiten eingesetzt werden, ist ein Anschrauben nicht möglich.

Eine weitere Methode besteht darin, die einzelnen Schneidplatten in nachgiebige, V-förmige Plattensitze des Grundkörpers einzuklemmen (sogenannte Self-Grip-Systeme). In n diesem Fall ist eine besonders genaue Fertigung der Plattensitze, mit äußerst geringen Toleranzen, erforderlich. Dies zieht einen hohen Arbeitsaufwand bei der Erstellung des Grundkörpers nach sich. Daneben ist ein weiterer Nachteil darin gegeben, dass es bei extremen Belastungen zu einem unerwünschten Lösen der Schneidplatten bzw. Schneidzähne kommen kann.

Eine zur vorstehend dargelegten ähnliche Methode besteht darin, Schneidplatten in einen V-förmigen Plattensitz eines Grundkörpers einzusetzen und dort mit keilförmigen Stiften zu fixieren. Auch in diesem Fall ist jedoch eine besonders exakte Fertigung der Plattensitze erforderlich. Zudem sind die Schneidplatten mit Ausnehmungen für die Stifte zu versehen, wodurch die Schneidplatten geschwächt werden.

Ausgehend von diesem Stand der Technik ist es Aufgabe der Erfindung, ein Schneidwerkzeug der eingangs genannten Art anzugeben, an dem eine bzw. mehrere Schneidplatten auf einfache Weise und mit hoher Kraft lösbar fixierbar sind.

Diese Aufgabe wird durch ein Schneidwerkzeug gemäß Anspruch 1 gelöst.

Die mit einem erfindungsgemäßen Schneidwerkzeug erzielten Vorteile sind insbesondere darin zu sehen, dass die vorgesehenen Schneidplatten auf einfache Weise mit extrem hoher Kraft lösbar am Grundkörper fixierbar sind. Es ist daher nun beispielsweise auch möglich, bei Sägeblättern mit einem Durchmesser von mehr als 2,5 Meter Schneidplatten lösbar anzubringen, ohne dass im Schneid- bzw. Sägeeinsatz ein Lösen einzelner Schneidplatten aus den Plattensitzen befürchtet werden muss. Gleichzeitig erlaubt es die erfindungsgemäß vorgesehene Kombination von Spannelementen mit Stellelementen, die jeweils im Grundkörper eingeformt bzw. in diesem positioniert sind, auch sehr kleine Schnittbreiten zu realisieren. Beispielsweise können beliebig dünne Sägeblätter einsetzt werden, da die für die Befestigung einer Schneidplatte vorgesehenen Elemente unabhängig von einer Stärke des Sägeblattes vorgesehen werden können.

Ein weiterer wichtiger Vorteil eines erfindungsgemäßen Schneidwerkzeuges liegt darin, dass im Vergleich mit anderen bekannten Lösungen, insbesondere Self-Grip-Systemen, die Plattensitze mit relativ großen Toleranzen gefertigt werden können. Während nämlich bei Self-Grip-Systemen die Plattensitze im Bereich von hundertstel Millimeter genau gefertigt sein müssen, damit eine Schneidplatte durch Klemmen fixiert werden kann, können bei einem erfindungsgemäßen Schneidwerkzeug wie einem Sägeblatt wesentlich größere Toleranzen vorgesehen werden, weil mit dem Anstellen der Spannelemente Fertigungsungenauigkeiten problemlos überbrückt werden können. Es ist daher ein wesentlich geringerer Vorbereitungs- bzw. Fertigungsaufwand für die Grundkörper gegeben.

Das erfindungsgemäß vorgesehene Befestigungssystem bewährt sich besonders, wenn mehrere Plattensitze vorgesehen sind, in welchen jeweils eine Schneidplatte mittels jeweils eines Spannelementes und eines damit zusammenwirkenden Stellelementes gehalten ist. Es können dann bei Schneidwerkzeugen mit einer Vielzahl von Schneidplatten einzelne Schneidplatten auf einfache Weise ausgetauscht werden.

Das zumindest eine Spannelement ist vorzugsweise als integraler Teil des Grundkörpers ausgebildet bzw. stellt einen elastisch verformbaren Bereich desselben dar.

In Bezug auf eine einfache Fertigung wie auch eine hohe Stabilität des Schneidwerkzeuges im Einsatz ist es bevorzugt, dass der Grundkörper insgesamt einteilig ausgebildet ist. Zweckmäßigerweise wird dabei der Grundkörper aus einem Stahl gebildet, insbesondere einem Stahl mit hoher Zähigkeit.

Das bzw. die vorgesehenen elastisch verformbaren Spannelemente können im Grundkörper auf verschiedene Art eingeformt werden, beispielsweise durch Wasserstrahlschneiden oder Drahterodieren. Bewährt hat es sich, die Spannelemente mittels eines Lasers im Grundkörper einzuschneiden. Dabei können gleichzeitig auch die Plattensitze im Grundkörper eingeschnitten werden.

Das oder die eingeformten Spannelemente können so ausgebildet sein, dass sie eine an eine Schneidplatte anstellbare Nase aufweisen, an die in einem Winkel ein Arm anschließt, der zum Zentrum des Grundkörpers hin bevorzugt verjüngt ausgebildet ist.

Dadurch können die Spannelemente mit relativ geringer Kraft durch Betätigung der Stellelemente an die Schneidplatten angestellt werden. Dabei ist es bevorzugt, dass das zumindest eine Spannelement am Übergang von der Nase zum Arm mit dem Stellelement in Verbindung steht. Bei Betätigung bzw. Fixierung einer Schneidplatte drückt dann das Stellelement auf eine Nase, wodurch sich das Spannelement an seiner schwächsten Stelle, nämlich am dem Übergang gegenüberliegenden Ende des Armes, verformt. Aufgrund der verjüngten Ausbildung des gegenüberliegenden Endes und einer Hebelwirkung ist eine für die Fixierung der Schneidplatte erforderliche Kraft minimiert.

Das bzw. die in Ausnehmungen des Grundkörpers vorgesehenen Stellelemente können auf unterschiedlichste Art realisiert werden. Hierfür können jegliche Elemente eingesetzt werden, die es erlauben, bei Betätigung ein Spannelement auf eine Schneidplatte zu drücken. In einer sehr einfachen Ausführungsform kann ein solches Stellelement lediglich aus einer Schraube bestehen. Gemäß der Erfindung umfasst das Stellelement einen teilweise etwa kreisförmigen, drehbaren Körper, der in zwei Randbereichen der Ausnehmung und am Spannelement anliegt. Dadurch wird für den drehbaren Körper eine 3-Punkt-Auflage bzw. 3-Punkt-Anlage geschaffen, aufgrund welcher der Körper unabhängig von seiner Stellung kippsicher in der Ausnehmung gehalten ist. Gleichzeitig ist eine Kontaktfläche zwischen dem Körper und anderen Teilen des Schneidwerkzeuges klein, weshalb der Körper bei Bedarf mit geringer Kraft gedreht werden kann. Beispielsweise ist es möglich, dass der drehbare Körper eine am Spannelement anliegende Nocke umfasst, sodass das zumindest eine Spannelement durch Drehen des Körpers von einer offenen in eine die Schneidplatte fixierende Stellung und umgekehrt gebracht werden kann. Diese Ausführungsform hat in Bezug auf Sägeblätter die Vorteile, dass einerseits jedes zu betätigende Stellelement an der Seite des Sägeblattes gut zugänglich ist und dass andererseits durch die vorgesehene Nocke das Stellelement zwischen dem Spannelement und Bereichen der Ausnehmung des Grundkörpers, in welcher es sitzt, quasi verkeilt, was zu einer besonders festen Verriegelung führt, wenn die Schneidplatte fixiert ist. Alternativ ist es auch möglich, dass der drehbare Körper eine am Spannelement anliegende Einbuchtung umfasst, die an einer Ausbuchtung des Spannelementes anliegt, sodass das zumindest eine Spannelement durch Drehen des Körpers von einer offenen in eine die Schneidplatte fixierende Stellung und umgekehrt gebracht werden kann.

In Bezug auf eine möglichst feste Fixierung der Schneidplatten kann des Weiteren vorgesehen sein, dass ein Plattensitz bzw. eine Schneidplatte etwa senkrecht zu einer Rotationsrichtung des Schneidwerkzeuges angeordnet ist und das zumindest eine Spannelement in Gegenrichtung zur Rotationsrichtung an die Schneidplatte anstellbar ist. Damit kann hohen auftretenden Kräften im Schneideinsatz wirksam entgegengewirkt werden.

Für höchste Schneidleistungen und groß dimensionierte Schneidwerkzeuge, beispielsweise Sägeblätter mit einem Durchmesser von bis zu vier Metern, kann es empfehlenswert sein, dass Plattensitze mit vorzugsweise in radialer Richtung des Grundkörpers verlaufenden Vorsprüngen ausgebildet sind und die Schneidplatten an ihren Grundflächen korrespondierende Einbuchtungen aufweisen. Damit kann im Schneideinsatz auftretenden Axialkräften entgegengewirkt werden.

Für ein erfindungsgemäßes Schneidwerkzeug wie ein Sägeblatt kann eine geeignete Schneidplatte bereitgestellt werden, wenn die Schneidplatte an ihrer Deckfläche an einem Ende einen schneidaktiven Bereich mit der Schneidkante und an einem gegenüberliegenden Ende einen Befestigungsbereich aufweist, wobei zwischen dem schneidaktiven Bereich und dem Befestigungsbereich eine Rippe vorgesehen ist, welche gegenüber den angrenzenden Flächen des schneidaktiven Bereiches und des Befestigungsbereiches erhöht ist. Durch die vorgesehene Ausbildung mit einer erhöhten Rippe zwischen dem schneidaktiven Bereich und dem Befestigungsbereich wird einerseits eine Trennung der genannten Bereiche erreicht, sodass der Befestigungsbereich im Schneideinsatz vor ablaufenden, heißen Spänen geschützt ist. Andererseits kann ein Spannelement des Grundkörpers an der Rippe zur Anlage kommen, wodurch ein Halt der Schneidplatte in einem Plattensitz verbessert ist.

Bevorzugt ist die Schneidplatte so ausgebildet, dass an die Schneidkante eine Spanmulde anschließt, welche in die Rippe übergeht. Ist diese Maßnahme vorgesehen, so können abgenommene Späne in vorteilhafter Weise abgeführt werden.

Um mittels eines Spannelementes eine gute Fixierung der Schneidplatte in einem Plattensitz zu erreichen, empfiehlt es sich, dass der Befestigungsbereich eine an die Rippe anschließende erste, im Querschnitt ansteigende Zone und eine zweite, an die erste Zone anschließende und im Querschnitt abfallende Zone aufweist. Dadurch wird verhindert, dass sich eine Schneidplatte im Schneideinsatz bzw. bei einwirkenden Schnittkräften in radialer Richtung bewegt.

Damit ein guter Formschluss mit einem Spannelement erreicht werden kann, kann des Weiteren vorgesehen sein, dass in der ersten und/oder zweiten Zone Mulden eingeformt sind. Dabei verlaufen die Mulden vorzugsweise symmetrisch zu einer Längsachse der Schneidplatte.

Eine erfindungsgemäß eingesetzte Schneidplatte kann ferner in Draufsicht länglich und mit einem gegenüber dem Befestigungsbereich verbreiterten schneidaktiven Bereich ausgebildet sein.

Die vorgesehene Rippe verläuft vorzugsweise normal zur Längsachse der Schneidplatte, damit über die gesamte Breite der Schneidplatte eine Trennung von Befestigungsbereich und schneidaktivem Bereich gegeben ist.

Ferner kann vorgesehen sein, dass die Schneidplatte im Bereich ihrer Grundfläche eine oder mehrere Einbuchtungen aufweist, die vorzugsweise über eine gesamte Länge und/oder Breite der Grundfläche verlaufen. Dies ermöglicht es, im Zusammenwirken mit einem korrespondierende Vorsprünge aufweisenden Plattensitz, einen Formschluss im Bereich der Grundfläche der Schneidplatte zu erreichen, wenn diese am Sägeblatt befestigt wird.

Weitere Merkmale, Vorteile und Wirkungen der Erfindung ergeben sich aus dem Zusammenhang der Beschreibung und den nachfolgenden Ausführungsbeispielen, anhand deren die Erfindung noch weitergehend dargestellt ist. In den Zeichnungen zeigen:
Fig. 1 einen Teilbereich eines erfindungsgemäßen Sägeblattes mit einem Spannelement in geöffneter Position;
Fig. 2 einen Schnitt entlang der Linie II-II in Fig. 1;
Fig. 3 einen Schnitt entlang der Linie III-II in Fig. 1;
Fig. 4 einen Teilbereich eines erfindungsgemäßen Sägeblattes mit einem Spannelement in fixierender Stellung;
Fig. 5 einen Schnitt entlang der Linie V-V in Fig. 4;
Fig. 6 einen Schnitt entlang der Linie VI-VI in Fig. 4;
Fig. 7 eine Seitenansicht einer Schneidplatte;
Fig. 8 eine rückseitige Ansicht einer Schneidplatte;
Fig. 9 eine stirnseitige Ansicht einer Schneidplatte;
Fig. 10 eine Schneidplatte in Draufsicht;
Fig.11 einen Teilbereich eines erfindungsgemäßen Sägeblattes mit einem Spannelement in geöffneter Position;
Fig.12 einen Teilbereich eines erfindungsgemäßen Sägeblattes mit einem Spannelement in fixierender Stellung.

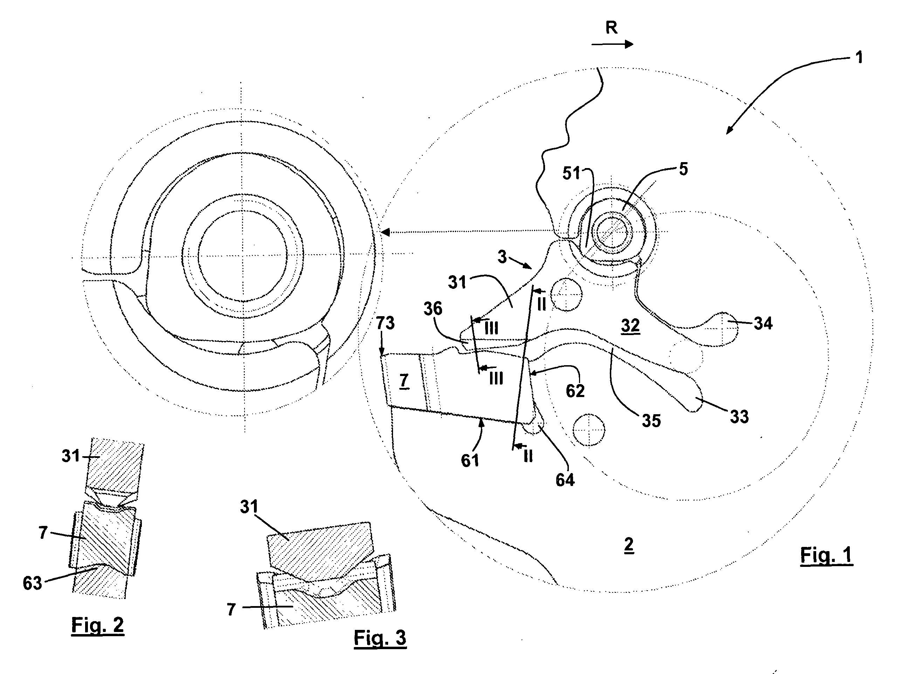

In Fig. 1 ist ein Teilbereich eines erfindungsgemäßen Schneidwerkzeuges in Form eines Sägeblattes 1 näher dargestellt. Das etwa kreisrunde Sägeblatt 1 umfasst einen Grundkörper 2, der aus einem im Wesentlichen ebenen, kreisförmigen Flachmaterial gebildet ist. Als Flachmaterial wird vorzugsweise ein hochzäher Stahl eingesetzt, in welchen mittels Lasers ein Plattensitz mit zwei Flächen 61, 62 sowie eine Freistellung 64 eingeschnitten ist. Die Freistellung 64 ist vorgesehen, damit die Flächen 61, 62 durch Schleifen nachbearbeitbar sind.

Des Weiteren weist der Grundkörper 2 ein eingeformtes Spannelement 3 auf, welches wie der Plattensitz mit einem Laser in den Grundkörper 2 eingeschnitten ist. Das Spannelement 3 weist, vom Zentrum des Grundkörpers 2 aus betrachtet, einen zuerst verjüngt ausgebildeten und sich dann etwa in radialer Richtung verbreiternd erstreckenden Arm 32 auf, an welchen in einem Winkel von etwa 80° bis 135° eine Nase 31 angeformt ist. Im Bereich seines zum Zentrum des Grundkörpers 2 hin gerichteten Endes ist der Arm 32 von zwei Freiräumen 33, 34 umgeben, die zusammen mit der verjüngten Ausbildung an dem einen Ende für eine gute elastische Verformbarkeit des Armes 32 in diesem Bereich sorgen. Ein weiterer Freiraum 35 ist unterhalb des Armes 32 vorgesehen, um ein Anstellen des Spannelementes 3 an eine Schneidplatte 7, welche in einem Plattensitz an den Flächen 61, 62 anliegt und deren vorragende Schneidkante 73 einen äußeren Flugkreis des Sägeblattes 1 beschreibt, zu ermöglichen. Um dieses Anstellen des Spannelementes 3 auf einfache Weise zu ermöglichen, ist in einer ebenfalls mittels Lasers eingeschnittenen Ausnehmung des Grundkörpers 2 ein in Draufsicht teilweise etwa kreisförmig ausgebildetes Stellelement 5 mit einer Nocke 51 drehbar gehalten. Das Stellelement 5 liegt einerseits im etwa kreisförmigen Bereich an zwei Stellen an einer nicht verformbaren Zone des Grundkörpers 2 und andererseits, wie aus Fig. 1 und der in dieser Figur gegebenen Detailansicht ersichtlich, im Bereich eines Überganges von der Nase 31 zum Arm 32 am Spannelement 3 an.

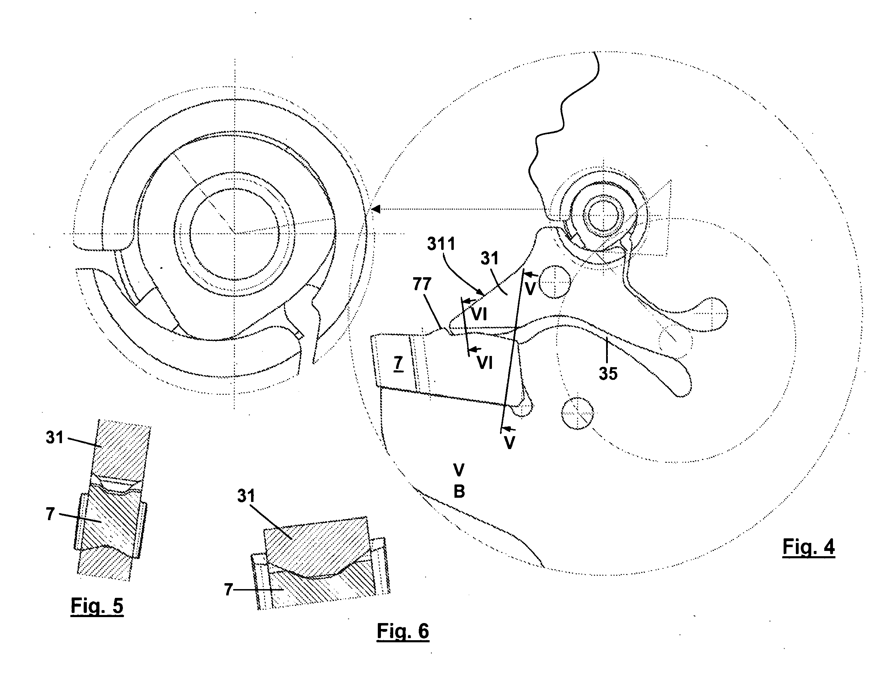

Bei der in Fig. 1 gezeigten Situation ist die Nocke 51 des Stellelementes 5 in einer Position, in welcher das Spannelement 3 nicht niedergedrückt wird, sondern geöffnet ist und die Schneidplatte 7 aus dem Plattensitz entnommen bzw. in diesen eingeführt werden kann. Dies kann beispielsweise erforderlich sein, wenn eine einzelne Schneidplatte 7 eines Sägeblattes 1 zu wechseln ist, beispielsweise, weil sie zu schleifen ist oder verschlissen ist und ersetzt werden muss. In dieser Situation ist ein geschliffener, endseitiger Bereich 36 der Nase 31 zur Oberfläche bzw. Deckfläche 73 der Schneidplatte 7 etwa 1 bis 2 Millimeter beabstandet. Wird nun der Exzenter bzw. das Stellmittel 5 gegen den Uhrzeigersinn gedreht, so wird durch die Nocke 51 auf das Spannelement 3 ein Druck ausgeübt, sodass sich dieses aufgrund seiner Flexibilität zur Schneidplatte 7 hin bewegt und diese letztlich mit einer entgegen einer Rotationsrichtung R des Sägeblattes 1 wirkenden Kraft fixiert (Fig. 4). Dabei wird das Stellelement 5 mit der Nocke 51 in eine Verriegelungsstellung überführt, die ein festes Fixieren der Schneidplatte 7 bewirkt. Das Stellmittel 5 kann zweckmäßigerweise mit Aufnahmen für einen Drehmomentschlüssel ausgestattet sein, sodass eine Verriegelung bzw. Fixierung der Schneidplatte 7, wie sie in Fig. 4 dargestellt ist, mit besonders geringem Kraftaufwand erfolgen werden kann. Um die gewünschte Verriegelung mit möglichst geringem Kraftaufwand zu erreichen und ein stufenloses Einstellen eines Anpressdruckes zu ermöglichen, kann zusätzlich, wie in den Fig. 1 und 4 dargestellt, ein mit der Nocke 51 in Kontakt stehender Bereich des Spannelementes 3 konkav ausgebildet sein.

Wie anhand der nicht maßstabsgetreuen Schnittbilder der Fig. 2, 3, 5 und 6 ersichtlich, ist ein Plattensitz mit einem Vorsprung 63 versehen, der sich in radialer Richtung des Grundkörpers 2 über die gesamte Länge des Plattensitzes erstreckt. Die Schneidplatte 7 weist eine entsprechende Einbuchtung 711 auf, sodass nicht nur ein Kraft-, sondern auch ein Formschluss im Bereich einer Grundfläche 71 der Schneidplatte 7 erreicht wird. Ähnlich weist das Spannelement 3 in einem endseitigen Bereich 36 der Nase 31 geschliffene Vorsprünge auf, die in ihrer Geometrie zu entsprechenden Mulden in der Deckfläche 72 der Schneidplatte 7 korrespondieren, in welche sie eingreifen. Dadurch kann insgesamt ein hocheffektiver Kraft- und Formschluss erreicht werden, sodass im Schneideinsatz sowohl hohe radiale auch als axiale Kräfte beherrschbar sind.

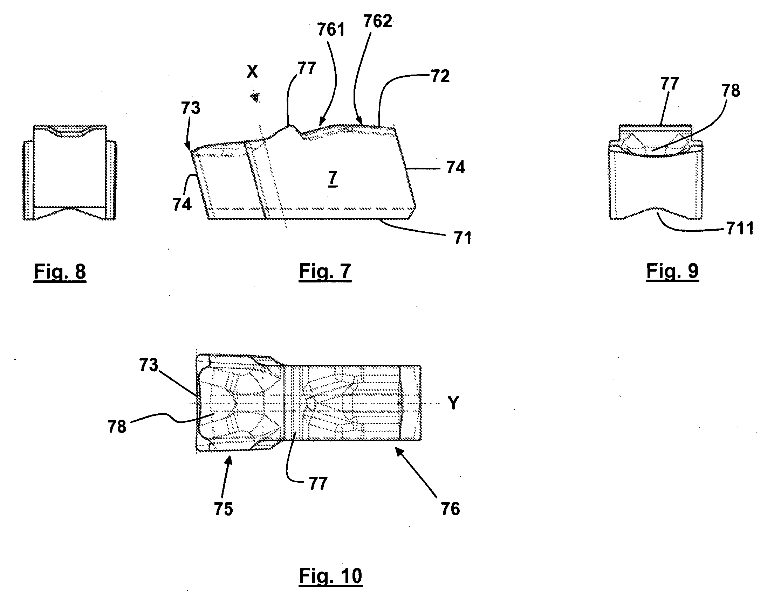

In den Fig. 7 bis 10 ist eine erfindungsgemäß eingesetzte Schneidplatte 7 näher dargestellt. Wie aus Fig. 7 ersichtlich, weist die Schneidplatte 7 eine Grundfläche 71 und eine gegenüberliegende Deckfläche 72 auf, welche über Seitenflächen 74 miteinander verbunden sind. Im Bereich der Deckfläche 72 weist die Schneidplatte 7 an einem Ende eine Schneidkante 73 auf, die im Einsatz für eine Spanabnahme sorgt. An die Schneidkante 73 schließt eine vertieft ausgebildete Spanmulde 78 an, an welcher die abgenommenen Späne abgleiten. Diese Spanmulde 78 geht unmittelbar in eine Rippe 77 über, die in ihrer Form und Höhe so bemessen ist, dass sie mit einem Rücken 311 einer Nase 31 eines Spannelementes 3 eine nahezu durchgängige Fläche bilden kann, was den Vorteil bietet, dass abgenommene Späne optimal abfließen können. Dies kann insbesondere wichtig sein, wenn aufgrund der Schnittbedingungen und/oder der bearbeiteten Werkstoffe eine Bildung von langen Spänen gegeben ist.

An dem der Schneidkante 73 entgegengesetzten Ende der Schneidplatte 7 ist ein Befestigungsbereich mit zwei Zonen 761, 762 vorgesehen, wobei eine erste Zone 761 unmittelbar an die Rippe 77 anschließt bzw. in diese übergeht. Wie insbesondere aus Fig. 7 und Fig. 10, die eine Schneidplatte 7 gemäß Fig. 7 in Richtung X betrachtet zeigt, ersichtlich ist, sind die Zonen 761, 762 mit Mulden ausgebildet, die symmetrisch zu einer Längsachse Y der Schneidplatte 7 verlaufen. In diese Mulden können korrespondierende Vorsprünge eines Spannelementes 3 eingreifen, sodass die Schneidplatte 7 gegen ein axiales Verschieben bzw. Verrutschen gesichert ist. Damit gleichzeitig ein Verschieben der Schneidplatte 7 in radialer Richtung hintangehalten wird, ist vorgesehen, dass im Querschnitt die erste Zone 761 aufsteigend und die zweite Zone 762 abfallend ausgebildet ist. Des Weiteren kann im Bereich der Grundfläche 71 eine entlang der Längsachse Y verlaufende Einbuchtung 711 vorgesehen sein, damit in ähnlicher Weise auch im Bereich der Grundfläche 71 ein Formschluss erreichbar ist.

Aufgrund der vorgesehenen Ausbildung der Schneidplatte 7 kann diese an einem erfindungsgemäßen Sägeblatt 1 kraft- und formschlüssig fixiert werden. Dies erlaubt es, wie aus Fig. 10 ersichtlich, den schneidaktiven Bereich 75 gegenüber dem Befestigungsbereich 76 verbreitert auszuführen, was den Vorteil bringt, dass das Sägeblatt 1 im Schneideinsatz stets freiläuft.

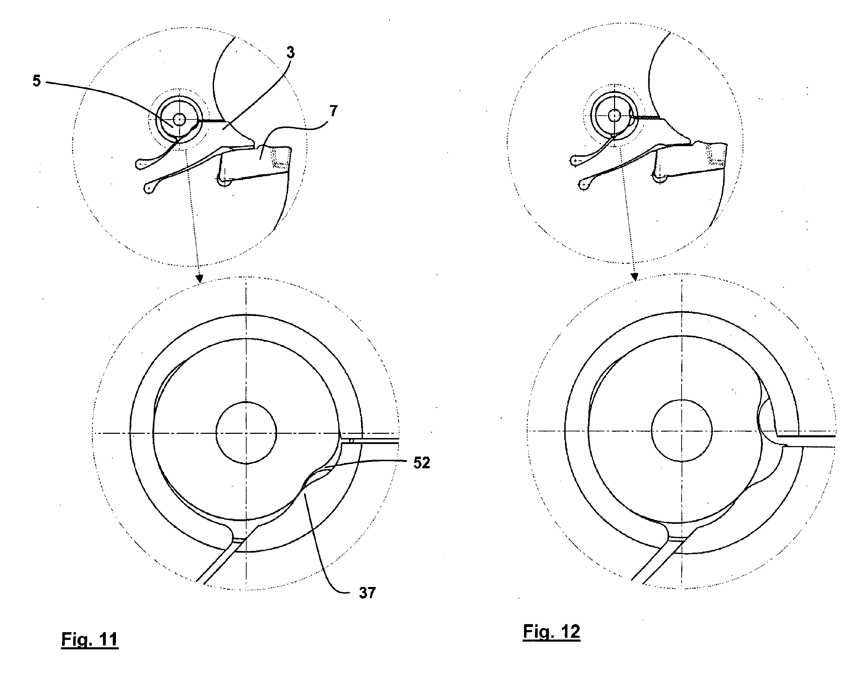

In den Fig. 11 und 12 sind in seitlicher Ansicht Teilbereiche einer weiteren Variante eines Sägeblattes 1 gezeigt, wobei die Teilbereiche eine einzelne Schneidplatte 7 umfassen. Die Schneidplatte 7 sitzt bei der in Fig. 11 dargestellten Situation lose im Plattensitz. Das Stellelement 5, das als drehbarer Körper ausgebildet ist, weist, wie insbesondere aus der Detailansicht in Fig. 11 ersichtlich ist, eine Einbuchtung 52 auf. Diese Einbuchtung 52 arbeitet mit einer Ausbuchtung 37 des Spannelementes 3 zusammen und ist in seiner Form etwa diesem angepasst. Der drehbare Körper bzw. das Stellelement 5 steht im Bereich der Einbuchtung 52 daher mit dem Spannelement 3 in Kontakt. Darüber hinaus liegt das Stellelement 5 lediglich in zwei getrennten Bereichen am Rand der Ausnehmung, in welcher es sich befindet, an. Dadurch ist für den drehbaren Körper eine 3-Punkt-Auflage bzw. 3-Punkt-Anlage geschaffen. Diese 3-Punkt-Anlage, bei der die Zentren der einzelnen Berührungsbereiche wie auch in der zuvor dargestellten Ausführungsvariante etwa in einem Winkel von jeweils 120° angeordnet sind, führt zu einer hohen Stabilität des drehbaren Körpers, wenn die Schneidplatte 7 fixiert ist, was in Fig. 12 dargestellt ist. Auch beim Fixieren selbst bzw. beim Lösen bringt die 3-Punkt-Anlage Vorteile, da einerseits ein Widerstand beim Aktivieren des Spannelementes 3 bzw. Drehen des Körpers gering ist und andererseits der drehbare Körper auch nicht zum Verklemmen neigt, was bei einer vollflächigen Anlage und starker Verwindung eines Sägeblattes im Schneideinsatz durchaus gegeben sein könnte.

Im Vergleich mit der in den Fig. 1 bis 4 dargestellten Variante zeigen sich bei dieser Ausführungsform zusätzliche Vorteile hinsichtlich der Stabilität der Position des drehbaren Körpers wie auch der Fixierung einer Schneidplatte 7 im Schneideinsatz, sodass diese Variante insbesondere für Anwendungen mit besonders anspruchsvollen Belastungsprofilen zum Einsatz kommt.

## Patentansprüche

1. Schneidwerkzeug mit einem Grundkörper (2), der zumindest einen Plattensitz aufweist, in welchem eine Schneidplatte (7) gehalten ist, wobei der Grundkörper (2) zumindest ein elastisch verformbares Spannelement (3) aufweist, das mithilfe eines in einer Ausnehmung des Grundkörpers (2) positionierten Stellelementes (5) an die Schneidplatte (7) anstellbar ist, um diese im Plattensitz zu halten, **dadurch gekennzeichnet, dass** das Stellelement (5) einen teilweise etwa kreisförmigen, drehbaren Körper umfasst, der in zwei Randbereichen der Ausnehmung und am Spannelement (3) anliegt, sodass für den drehbaren Körper eine 3-Punkt-Anlage geschaffen ist.

2. Schneidwerkzeug nach Anspruch 1, **dadurch gekennzeichnet, dass** mehrere Plattensitze vorgesehen sind, in welchen jeweils eine Schneidplatte (7) mittels jeweils eines Spannelementes (3) und eines damit zusammenwirkenden Stellelementes (5) gehalten ist.

3. Schneidwerkzeug nach Anspruch 1 oder 2, **dadurch gekennzeichnet, dass** das zumindest eine Spannelement (3) als integraler Teil des Grundkörpers (2) ausgebildet ist.

4. Schneidwerkzeug nach einem der Ansprüche 1 bis 3, **dadurch gekennzeichnet, dass** der Grundkörper (2) insgesamt einteilig ausgebildet ist.

5. Schneidwerkzeug nach Anspruch 4, **dadurch gekennzeichnet, dass** der Grundkörper (2) aus einem Stahl besteht.

6. Schneidwerkzeug nach Anspruch 5, **dadurch gekennzeichnet, dass** das zumindest eine Spannelement (3) mittels eines Lasers im Grundkörper (2) eingeschnitten ist.

7. Schneidwerkzeug nach einem der Ansprüche 1 bis 6, **dadurch gekennzeichnet, dass** das zumindest eine Spannelement (3) eine an eine Schneidplatte (7) anstellbare Nase (31) aufweist, an die bevorzugt in einem Winkel ein Arm (32) anschließt.

8. Schneidwerkzeug nach Anspruch 7, **dadurch gekennzeichnet, dass** der Arm (32) zum Inneren bzw. Zentrum des Grundkörpers (2) hin verjüngt ausgebildet ist.

9. Schneidwerkzeug nach Anspruch 8, **dadurch gekennzeichnet, dass** das zumindest eine Spannelement (3) am Übergang von der Nase (31) zum Arm (32) mit dem Stellelement (5) in Verbindung steht.

10. Schneidwerkzeug nach Anspruch 1, **dadurch gekennzeichnet, dass** der drehbare Körper eine am Spannelement (3) anliegende Nocke (51) umfasst, sodass das zumindest eine Spannelement (3) durch Drehen des Körpers von einer offenen in eine die Schneidplatte (7) fixierende Stellung und umgekehrt gebracht werden kann.

11. Schneidwerkzeug nach Anspruch 1, **dadurch gekennzeichnet, dass** der drehbare Körper eine Einbuchtung (52) umfasst, die an einer Ausbuchtung (37) des Spannelementes (3) anliegt, sodass das zumindest eine Spannelement (3) durch Drehen des Körpers von einer offenen in eine die Schneidplatte (7) fixierende Stellung und umgekehrt gebracht werden kann.

12. Schneidwerkzeug nach einem der Ansprüche 1 bis 11, **dadurch gekennzeichnet, dass** der Plattensitz bzw. die Schneidplatte (7) etwa senkrecht zu einer Rotationsrichtung (R) des Schneidwerkzeuges angeordnet ist und das zumindest eine Spannelement (3) in Gegenrichtung zur Rotationsrichtung (R) an die Schneidplatte (7) anstellbar ist.

13. Schneidwerkzeug nach einem der Ansprüche 1 bis 12, **dadurch gekennzeichnet, dass** der zumindest eine Plattensitz mit vorzugsweise in radialer Richtung des Grundkörpers (2) verlaufenden Vorsprüngen (63) ausgebildet ist und die Schneidplatte (7) an ihrer Grundfläche (71) korrespondierende Einbuchtungen (711) aufweist.

14. Schneidwerkzeug nach einem der Ansprüche 1 bis 13, **dadurch gekennzeichnet, dass** das Schneidwerkzeug ein Sägeblatt (1) ist.

## Claims

1. A cutting tool with a base body (2) having at least one insert seat in which a cutting insert (7) is retained, wherein the base body (2) has at least one elastically deformable clamping element (3) which can be engaged with the cutting insert (7) by means of an actuator element (5) positioned in a recess of the base body (2) to retain the cutting insert (7) in the insert seat, **characterized in that** the actuator element (5) comprises a partially approximately circular rotatable body which abuts on two peripheral areas of the recess and on the clamping element (3) in such a manner that a three-point support is provided for the rotatable body.

2. The cutting tool according to claim 1, **characterized in that** a plurality of insert seats are provided in each of which one cutting insert (7) is retained by means of one clamping element (3), respectively, and an actuator element (5) interacting therewith.

3. The cutting tool according to claim 1 or claim 2, **characterized in that** the at least one clamping element (3) is formed as integral part of the base body (2).

4. The cutting tool according to any one of the claims 1 to 3, **characterized in that** the base body (2) as a whole is formed in one piece.

5. The cutting tool according to claim 4, **characterized in that** the base body (2) is made of steel.

6. The cutting tool according to claim 5, **characterized in that** the at least one clamping element (3) is cut into the base body (2) by means of a laser.

7. The cutting tool according to any one of the claims 1 to 6, **characterized in that** the at least one clamping element (3) has a nose (31) which is engagable with a cutting insert (7), with which nose preferably an arm (32) is connected at an angle.

8. The cutting tool according to claim 7, **characterized in that** the arm (32) is formed tapered towards the inside or the center of the base body (2).

9. The cutting tool according to claim 8, **characterized in that** the at least one clamping element (3) is in connection with the actuator element (5) at the transition from the nose (31) to the arm (32).

10. The cutting tool according to claim 1, **characterized in that** the rotatable body comprises a cam (51) abutting on the clamping element (3) in such a manner that by rotating the body, the at least one clamping element (3) can be brought from an open position into a position fixing the cutting insert (7) and vice versa.

11. The cutting tool according to claim 1, **characterized in that** the rotatable body comprises an indentation (52) on which a protrusion (37) of the clamping element (3) abuts in such a manner that by rotating the body, the at least one clamping element (3) can be brought from an open position into a position fixing the cutting insert (7) and vice versa.

12. The cutting tool according to any one of the claims 1 to 11, **characterized in that** the insert seat or the cutting insert (7) is arranged approximately perpendicular to a rotational direction (R) of the cutting tool, and that the at least one clamping element (3) is engagable with the cutting insert (7) in opposite direction of the rotational direction (R).

13. The cutting tool according to any one of the claims 1 to 12, **characterized in that** the a least one insert seat is formed with projections (63) preferably running in radial direction of the base body (2), and that the cutting insert (7) has corresponding recesses (711) on its bottom face (71).

14. The cutting tool according to any one of the claims 1 to 13, **characterized in that** the cutting tool is a saw blade (1).

## Revendications

1. Outil de coupe avec un corps de base (2), comportant au moins un logement de plaque, dans lequel est maintenue une plaque coupante (7), le corps de base (2) comportant au moins élément de serrage (3) élastiquement déformable, réglable contre la plaque coupante (7) à l'aide d'un élément de réglage (5) positionné dans un évidement du corps de base (2), afin de maintenir celle-ci dans le logement de plaque, **caractérisé en ce que** l'élément de réglage (5) comprend un corps rotatif, partiellement quasiment circulaire, qui s'applique dans deux régions de bord de l'évidement et sur l'élément de serrage (3), de sorte qu'un appui 3 points est fourni pour le corps rotatif.

2. Outil de coupe selon la revendication 1, **caractérisé en ce qu'**il est prévu plusieurs logements de plaque, dans chacun desquels est maintenue une plaque coupante (7), au moyen d'un élément de serrage (3) respectif coopérant avec un élément de réglage (5) respectif.

3. Outil de coupe selon l'une des revendications 1 ou 2, **caractérisé en ce que** l'au moins un élément de serrage (3) est conçu comme une partie intégrante du corps de base (2).

4. Outil de coupe selon l'une des revendications 1 à 3, **caractérisé en ce que** le corps de base (2) est conçu d'une seule pièce dans son ensemble.

5. Outil de coupe selon la revendication 4, **caractérisé en ce que** le corps de base (2) est constitué d'un acier.

6. Outil de coupe selon la revendication 5, **caractérisé en ce que** l'au moins un élément de serrage (3) est entaillé dans le corps de base (2) au moyen d'un laser.

7. Outil de coupe selon l'une des revendications 1 à 6, **caractérisé en ce que** l'au moins un élément de serrage (3) comporte un nez (31) réglable contre une plaque coupante (7), lequel se prolonge par un bras (32) de préférence en formant un angle.

8. Outil de coupe selon la revendication 7, **caractérisé en ce que** le bras (32) est conçu de manière à se rétrécir vers l'intérieur ou le centre du corps de base (2).

9. Outil de coupe selon la revendication 8, **caractérisé en ce que** l'au moins un élément de serrage (3) est en liaison avec l'élément de réglage (5) au niveau de la transition entre le nez (31) et le bras (32).

10. Outil de coupe selon la revendication 1, **caractérisé en ce que** le corps rotatif comprend une came (51) appliquée sur l'élément de serrage (3), de manière à pouvoir faire passer l'au moins un élément de serrage (3) d'une position ouverte à une position fixant la plaque coupante (7) et inversement, par une rotation du corps.

11. Outil de coupe selon la revendication 1, **caractérisé en ce que** le corps rotatif comprend une échancrure (37) appliquée sur un renflement (37) de l'élément de serrage (3), de manière à pouvoir faire passer l'au moins un élément de serrage (3) d'une position ouverte à une position fixant la plaque coupante (7) et inversement, par une rotation du corps.

12. Outil de coupe selon l'une des revendications 1 à 11, **caractérisé en ce que** le logement de plaque ou la plaque coupante (7) est disposé(e) quasiment perpendiculairement au sens de rotation (R) de l'outil de coupe, et l'au moins un élément de serrage (3) peut être réglé contre la plaque coupante (7) dans le sens opposé au sens de rotation (R).

13. Outil de coupe selon l'une des revendications 1 à 12, **caractérisé en ce que** l'au moins un logement de plaque est conçu avec des saillies (63) s'étendant de préférence dans le sens radial du corps de base (2), et la plaque coupante (7) comporte des échancrures correspondantes (711) dans sa surface de base (71).

14. Outil de coupe selon l'une des revendications 1 à 13, **caractérisé en ce que** l'outil de coupe est une lame de scie (1).
